(19) Europäisches Patentamt
European Patent Office
Office européen des brevets

(11) **EP 3 787 175 B1**

(12) **EUROPEAN PATENT SPECIFICATION**

(45) Date of publication and mention
of the grant of the patent:
**05.07.2023 Bulletin 2023/27**

(21) Application number: **18916775.2**

(22) Date of filing: **24.04.2018**

(51) International Patent Classification (IPC):
**H02M 1/00** *(2006.01)*    **H02M 1/32** *(2007.01)*
**H02M 5/12** *(2006.01)*    **H02M 7/483** *(2007.01)*

(52) Cooperative Patent Classification (CPC):
**H02M 1/325; H02M 1/0025; H02M 1/0064;**
**H02M 5/12; H02M 7/4835;** H02M 7/4833

(86) International application number:
**PCT/JP2018/016572**

(87) International publication number:
**WO 2019/207640 (31.10.2019 Gazette 2019/44)**

(54) **POWER CONVERSION DEVICE AND CONSTANT ACQUIRING METHOD**

LEISTUNGSUMWANDLUNGSVORRICHTUNG UND VERFAHREN ZUR KONSTANTEN
ERFASSUNG

DISPOSITIF DE CONVERSION DE COURANT ET PROCÉDÉ D'ACQUISITION DE CONSTANTE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**03.03.2021 Bulletin 2021/09**

(72) Inventors:
• **ARAI Takuro**
  **Tokyo 105-8001 (JP)**
• **SEKIGUCHI Kei**
  **Tokyo 105-8001 (JP)**
• **SUZUKI Daichi**
  **Kawasaki-shi, Kanagawa 212-0013 (JP)**

(73) Proprietors:
• **KABUSHIKI KAISHA TOSHIBA**
  **Minato-ku**
  **Tokyo 105-8001 (JP)**
• **Toshiba Energy Systems & Solutions**
  **Corporation**
  **Saiwai-ku**
  **Kawasaki-shi**
  **Kanagawa 2120013 (JP)**

(74) Representative: **AWA Sweden AB**
**Junkersgatan 1**
**582 35 Linköping (SE)**

(56) References cited:
EP-A1- 3 288 169        WO-A1-2016/170869
JP-A- 2014 143 864      SE-A1- 1 750 521
US-A1- 2014 211 528     US-A1- 2016 139 578

**Description**

[Technical Field]

An embodiment of the present invention relates to a power conversion device and a method for controlling a power conversion device.

[Background Art]

Conventionally, a modular multi-level converter in which unit converters are connected in multiple stages is known as a power converter capable of converting a high voltage equivalent to a voltage of a power system or a power distribution system.

In the modular multi-level converter, when composed values of AC voltages of phases of three-phase AC power of an AC system are slightly different, an excessive short circuit current flows between the phases, and there is a possibility of the modular multi-level converter or a peripheral device thereof being damaged. In order to prevent this, even in a case in which a short circuit current flows in accordance with insertion of a buffer reactor into each phase of the modular multi-level converter, the short circuit current can be limited such that it is not excessive. However, this buffer reactor may incur an increase in size and an increase in cost of the modular multi-level converter.

As a method for solving such a problem, a conventional technology of disposing a single-phase three-winding transformer in each phase of a modular multi-level converter has been proposed. In this conventional technology, a primary winding of a single-phase three-winding transformer is connected to an AC system, and a leakage impedance between a primary winding and a secondary winding and a leakage impedance between a primary winding and a tertiary winding are set to be the same. In accordance with this, the leakage impedance between the secondary winding and the tertiary winding of the single-phase three-winding transformer limits a short circuit current, and the short circuit current can be limited such that it is not excessive without using a high-cost and large-size reactor like a buffer reactor. EP 3 288 169A1, US 2014/211528 A1, SE 1 750 521 A1 and US 2016/139578 A1 relate to power conversion devices.

It is preferable that a transformer of a power converter connected to an AC system, in order to inhibit an outflow of harmonics due to non-linearity of excitation characteristics of the transformer to the system, should have a delta connection. However, generally, in a modular multi-level converter of a conventional technology, a primary winding, a secondary winding, and a tertiary winding of a single-phase three-winding transformer are Y connected. For this reason, in order to inhibit an outflow of harmonics due to non-linearity of excitation characteristics of a transformer to a system, separately from a primary winding, a secondary winding, and a tertiary winding of a single-phase three-winding transformer, it is preferable to add a quaternary winding called a stabilizing winding that is delta connected. The quaternary winding that is delta connected can cause harmonics accompanying non-linearity of excitation characteristics of the single-phase three-winding transformer to flow back within the line connection and thus can inhibit adverse effects on the system.

However, in a case in which a modular multi-level converter has a quaternary winding, and imbalance occurs in three-phase AC power, imbalance occurs in voltages generated in accordance with a leakage impedance between the secondary winding and the quaternary winding and a leakage impedance between the tertiary winding and the quaternary winding. As a result, the controllability of the modular multi-level converter deteriorates, and there is a problem in that the operation cannot be continued.

[Citation List]

[Patent Literature]

[Patent Literature 1]
Japanese Unexamined Patent Application, First Publication No. 2013-115837
[Patent Literature 2]
Japanese Unexamined Patent Application, First Publication No. 2016-208743
[Patent Literature 3]
Japanese Unexamined Patent Application, First Publication No. 2014-108000

An object of the present invention is to provide a power conversion device and a method for controlling a power conversion device capable of continuing to operate with the controllability of a power converter maintained even in a case in which an external disturbance occurs in an AC system.

[Summary of Invention]

[Technical Problem]

An object to be achieved by the present invention is to provide a power conversion device and a method for controlling a power conversion device capable of continuing to operate with the controllability of a power converter maintained even in a case in which an external disturbance occurs in an AC system.

[Solution to Problem]

The invention is defined by a power conversion device according to claim 1 and a method for controlling a power conversion device according to claim 7. Advantageous aspects of the present invention are given by the dependent claims.

[Brief Description of Drawings]

Fig. 1 is a diagram illustrating an example of the configuration of a power conversion device 1 according to an embodiment.
Fig. 2 is a diagram illustrating an example of the configuration of a cell CL.
Fig. 3 is a diagram illustrating another example of the configuration of a cell CL.
Fig. 4 is a diagram illustrating an example of an arrangement of windings W of a transformer TR.
Fig. 5 is a diagram illustrating another example of an arrangement of windings W of a transformer TR.
Fig. 6 is a diagram illustrating active power of each phase of an AC system in a case in which no external disturbance occurs.
Fig. 7 is a diagram illustrating active power of each phase of an AC system in a case in which an external disturbance occurs.
Fig. 8 is a diagram schematically illustrating magnetic fluxes generated around windings W in a case in which an external disturbance occurs.
Fig. 9 is a diagram illustrating an example of the configuration of a converter controller 20.
Fig. 10 is a diagram illustrating an example of a detection technique for detecting an AC voltage of each phase using a voltage detector VM.
Fig. 11 is a diagram illustrating an example of an equivalent circuit of leakage impedance of a transformer TR.
Fig. 12 is a diagram illustrating an example of control results acquired by a converter controller of a comparative example.
Fig. 13 is a diagram illustrating an example of control results of a power converter 10 using a converter controller 20.
Fig. 14 is a flowchart illustrating an example of the flow of the process of the converter controller 20.

[Description of Embodiments]

Hereinafter, a power conversion device and a method for controlling a power conversion device according to an embodiment will be described with reference to the drawings.

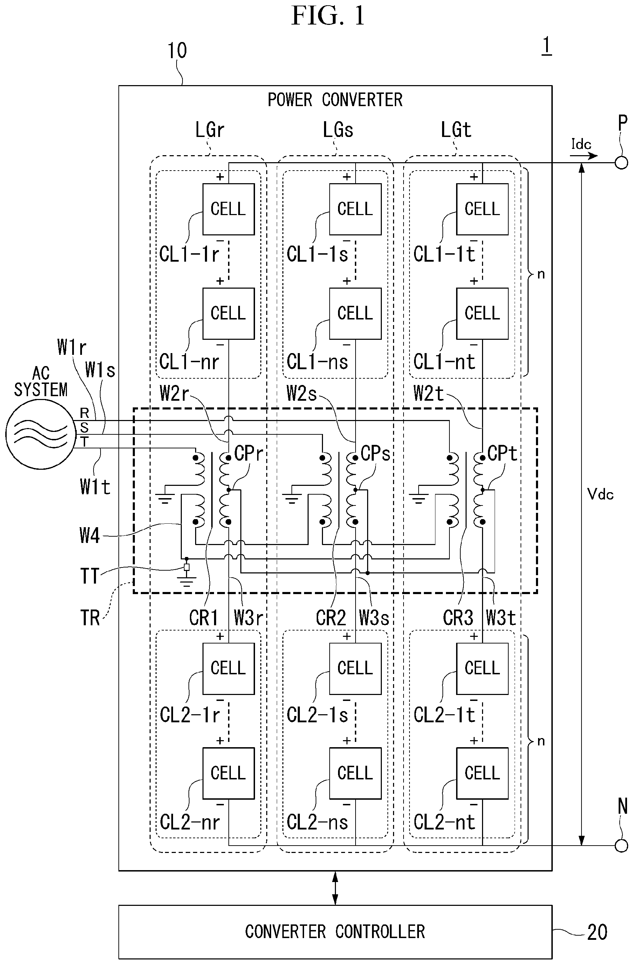

Fig. 1 is a diagram illustrating an example of the configuration of a power conversion device 1 according to an embodiment. The power conversion device 1 includes a power converter 10 and a converter controller 20. The power converter 10 performs mutual conversion between AC power of an AC system and DC power of a DC system. The power converter 10 includes a plurality of legs LG between a positive terminal P and a negative terminal N. The number of legs LG, for example, corresponds to a constant of AC power supplied by the AC system. The AC system supplies AC power of a three-phase three-wire system, for example, of an R phase, an S phase, and a T phase, and the power converter 10 includes a leg LGr corresponding to the R phase, a leg LGs corresponding to the S phase, and a leg LGt corresponding to the T phase. This AC power, for example, is AC power of 10 [kV] or higher such as a high voltage or an extra-high voltage. In the following description, in a case in which the legs LGr, LGs, and LGt do not need to be distinguished from each other, they will be collectively described as a "leg LG".
The legs LG have the same configuration. In the following description, "r" will be assigned to the end of a reference sign of each component relating to the leg LGr, "s" will be assigned to the end of a reference sign of each component relating to the leg LGs, and "t" will be assigned to the end of a reference sign of each component relating to the leg LGt. In addition, in a case in which a leg LG to which a component relates does not need to be identified, "r", "s", or "t" will be omitted in the representation.

EP 3 787 175 B1

One of three phases of AC power supplied by an AC system is connected to each leg LG through a transformer TR. The transformer TR, for example, is a four-winding transformer including three sets of single-phase windings and quaternary windings W4 that are stabilizing windings. An R-phase primary winding W1r connected to the R phase of the AC system, an S-phase primary winding W1s connected to the S phase of the AC system, and a T-phase primary winding W1t are included in a primary winding of the transformer TR. In addition, an R-phase secondary winding W2r, an S-phase secondary winding W2s, and a T-phase secondary winding W2t are included in a secondary winding of the transformer TR. An R-phase tertiary winding W3r, an S-phase tertiary winding W3s, and a T-phase tertiary winding W3t are included in a tertiary winding of the transformer TR. The quaternary windings W4 disposed in correspondence with respective phases are delta connected.

As illustrated in Fig. 1, the R-phase primary winding W1r, the S-phase primary winding W1s, and the T-phase primary winding W1t are Y connected, and a neutral point thereof is grounded directly or through neutral point grounding resistance (for example, several [Ω]). The R-phase secondary winding W2r, the S-phase secondary winding W2s, and the T-phase secondary winding W2t are Y connected, and the R-phase tertiary winding W3r, the S-phase tertiary winding W3s, and the T-phase tertiary winding W3t are Y connected, and neutral points therefore are connected to each other.

In the following description, a point at which the R-phase secondary winding W2r and the R-phase tertiary winding W3r are connected will be referred to as a neutral point CPr, a point at which the S-phase secondary winding W2s and the S-phase tertiary winding W3s are connected will be referred to as a neutral point CPs, and a point at which the T-phase secondary winding W2t and the T-phase tertiary winding W3t are connected will be referred to as a neutral point CPt.

The secondary winding W2 is connected to a positive-side arm of each leg LG such that a positive side of an electric potential generating magnetism that is generated in the secondary winding W2 is connected to a positive electrode P of the leg LG. The tertiary winding W3 is connected to a negative-side arm of each leg LG such that a negative side of an electric potential generating magnetism that is generated in the tertiary winding W3 is connected to a negative electrode N of the leg LG.

The leg LGr includes n cells CL (cells CL1-1r to CL1-nr and cells CL2-1r to CL2-nr illustrated in the drawing) connected in series in each of the positive-side arm and the negative-side arm. Here, n is a natural number. This similarly applies also to the legs LGs and LGt.

The R-phase secondary winding W2r is connected to a positive-side arm of the R phase, the S-phase secondary winding W2s is connected to a positive-side arm of the S phase, and the T-phase secondary winding W2t is connected to a positive-side arm of the T phase. The R-phase tertiary winding W3r is connected to a negative-side arm of the R phase, the S-phase tertiary winding W3s is connected to a negative-side arm of the S phase, and the T-phase tertiary winding W3t is connected to a negative-side arm of the T phase. A positive terminal of the cell CL1-1 is one example of "a first end of the positive-side arm", a negative-side terminal of the cell CL2-n is one example of "a first end of the negative-side arm", a negative terminal of the cell CL1-n is one example of "a second end of the positive-side arm", and a positive terminal of the cell CL2-1 is one example of "a second end of the negative-side arm".

In the following description, in a case in which the primary windings W1, the secondary windings W2, the tertiary windings W3, and the quaternary windings W4 do not need to be distinguished from each other, they will be collectively referred to as "a winding W".

[Regarding cell CL]

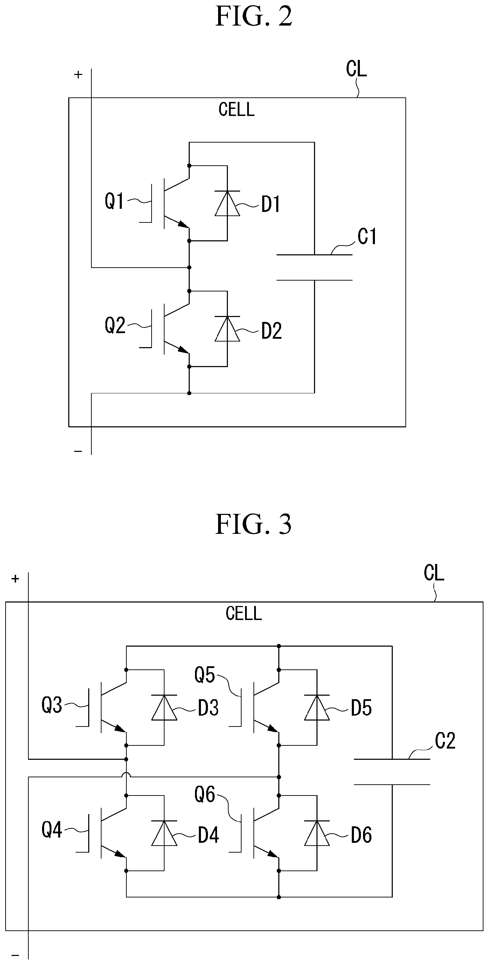

In the power converter 10, as the cell CL, any one of a cell CL of a half bridge circuit illustrated in Fig. 2 and a cell CL of a full bridge circuit illustrated in Fig. 3 may be used.

Fig. 2 is a diagram illustrating an example of the configuration of a cell CL. The cell CL illustrated in Fig. 2 is a half bridge circuit. The cell CL, for example, includes a plurality of switching elements Q1 and Q2, diodes D1 and D2 of a number corresponding to the switching elements Q, and a capacitor C1. The switching element Q, for example, is an insulated gate bipolar transistor (hereinafter, referred to as an IGBT). However, the switching element Q is not limited to an IGBT and may be any element as long as it is a switching element that can realize a converter or an inverter.

The switching element Q1 and the switching element Q2 are connected in series. The switching element Q1 and the switching element Q2 are connected in parallel with the capacitor C1. The switching element Q1 and the diode D1 are connected in parallel, and the switching element Q2 and the diode D2 are connected in parallel. A positive terminal of the cell CL is connected to a connection point between the switching element Q1 and the switching element Q2, and a negative terminal of the cell CL is connected to an emitter terminal of the switching element Q2.

Fig. 3 is a diagram illustrating another example of the configuration of a cell CL. The cell CL illustrated in Fig. 3 is a full bridge circuit. The cell CL may have a configuration in which a capacitor C is connected in parallel with a circuit in which two sets of a parallel circuit of a switching element Q and a diode D are connected in series. In the example illustrated in Fig. 3, the cell CL includes a plurality of switching elements Q3 to Q6, diodes D3 to D6 of a number corresponding to the switching elements Q, and a capacitor C2. A positive terminal of the cell CL is connected to a

4

connection point between the switching element Q3 and the switching element Q4, and a negative terminal of the cell CL is connected to a connection point between the switching element Q5 and the switching element Q6.

In each switching element Q, a switching terminal (not illustrated in the drawing) for performing switching between on/off of the switching element Q is included, and a control signal is input to the switching terminal from the converter controller 20. The converter controller 20 controls the operation of the power converter 10 by outputting a control signal to the power converter 10 on the basis of a detection signal acquired from the power converter 10. In accordance with each switching element Q of the converter controller 20 being switched on or off on the basis of a control signal, the capacitor C1 included in the cell CL is charged or discharged.

[Arrangement of winding W of transformer TR]

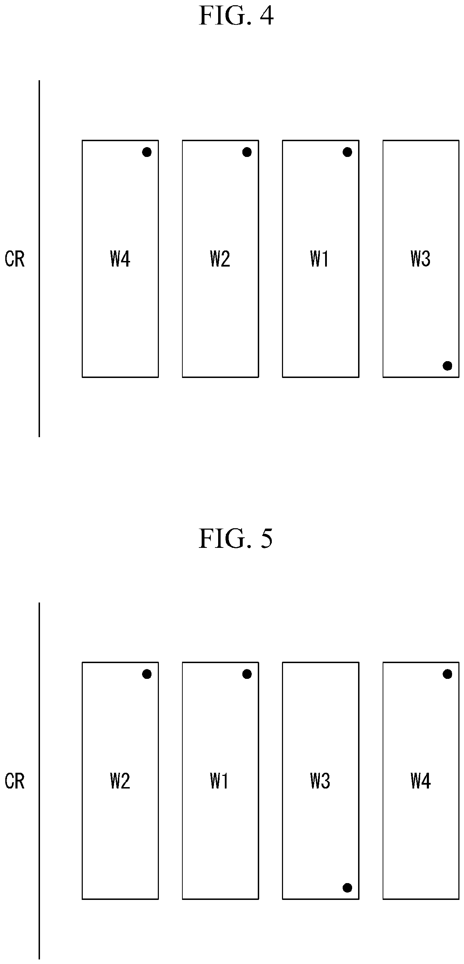

Fig. 4 is a diagram illustrating an example of an arrangement of windings W of a transformer TR. As illustrated in Fig. 4, the transformer TR is configured such that the windings W are wound in layers in a concentric circle shape in a radial direction of the iron core CR in order of a quaternary winding W4, a secondary winding W2, a primary winding W1, and a tertiary winding W3 from a side close to the iron core CR using the iron core (an iron core CR illustrated in the drawing) as an axis. The windings W are arranged at positions at which a leakage impedance between the primary winding W1 and the secondary winding W2 and a leakage impedance between the primary winding W1 and the tertiary winding W3 match each other. For example, by disposing the secondary winding W2 on a side inward from the primary winding W1 when seen from the iron core CR, disposing the tertiary winding W3 on a side outward from the primary winding W1, and matching a distance between the primary winding W1 and the secondary winding W2 and a distance between the primary winding W1 and the tertiary winding W3 each other, leakage impedances between the primary winding W1 and the tertiary winding W3 can be configured to match each other.

The transformer TR is designed such that the leakage impedance between the primary winding W1 and the secondary winding W2 and the leakage impedance between the primary winding W1 and the tertiary winding W3 coincide with each other. As described above, by connecting the secondary winding W2 and the tertiary winding W3 to the leg LG with opposite polarities and causing the leakage impedances to coincide with each other, a magnetomotive force caused by a DC current flowing from a positive-side arm to a negative-side arm or a magnetomotive force caused by a DC current flowing from the negative-side arm to the positive-side arm is offset, and the influence of changes in power corresponding to the magnetomotive force on an AC system or a DC system can be inhibited. Details of leakage impedances between the quaternary windings W4 and the other windings will be described below.

The power converter 10 causes harmonics accompanying non-linearity of excitation characteristics of the transformer TR to flow back within the delta connection configured using the quaternary winding W4 and thus can inhibit the influence of changes in power corresponding to the magnetomotive force on an AC system or a DC system.

In addition, a lightning arrestor TT may be connected to the quaternary winding W4 such that a dielectric breakdown is not caused. For example, the lightning arrestor TT is connected between the quaternary winding W4 and a ground electric potential (for example, the ground). In accordance with this, even in a case in which an excessive voltage is applied to the power converter 10 or the AC system due to a lightning surge or the like, a current can be inhibited without disposing a reactor in the leg LG.

Fig. 5 is a diagram illustrating another example of an arrangement of windings W of a transformer TR. As illustrated in Fig. 5, the transformer TR is configured such that the windings W are wound in layers in a concentric circle shape in a radial direction of an iron core CR in order of a secondary winding W2, a primary winding W1, a tertiary winding W3, and a quaternary winding W4 from a side close to the iron core CR using the iron core CR as an axis. For example, by disposing the secondary winding W2 on a side inward from the primary winding W1 when seen from the iron core CR, disposing the tertiary winding W3 on a side outward from the primary winding W1, and matching a distance between the primary winding W1 and the secondary winding W2 and a distance between the primary winding W1 and the tertiary winding W3 each other, leakage impedances between the primary winding W1 and the tertiary winding W3 can be configured to match each other.

The iron core CR and the quaternary winding W4, the quaternary winding W4 and the secondary winding W2, the secondary winding W2 and the primary winding W1, or the primary winding W1 and the tertiary winding W3 may be partitioned, for example, using an insulating object, or a distance of a degree for which an insulating breakdown does not occur may be open therebetween. In the example illustrated in Fig. 4 or Fig. 5, it may be configured such that the secondary winding W2 is disposed on a side outward from the primary winding W1 when seen from the iron core CR, and the tertiary winding W3 is disposed on a side inward from the primary winding W1 as long as distances to the primary windings W1 match each other.

Here, in a case in which the windings W are arranged as illustrated in Figs. 4 and 5, a distance from the quaternary winding W4 to the secondary winding W2 and a distance from the quaternary winding W4 to the tertiary winding W3 cannot be configured to match each other. For this reason, a leakage impedance between the quaternary winding W4 and the secondary winding W2 and a leakage impedance between the quaternary winding W4 and the tertiary winding W3 cannot be configured to match each other.

[Regarding zero phase current]

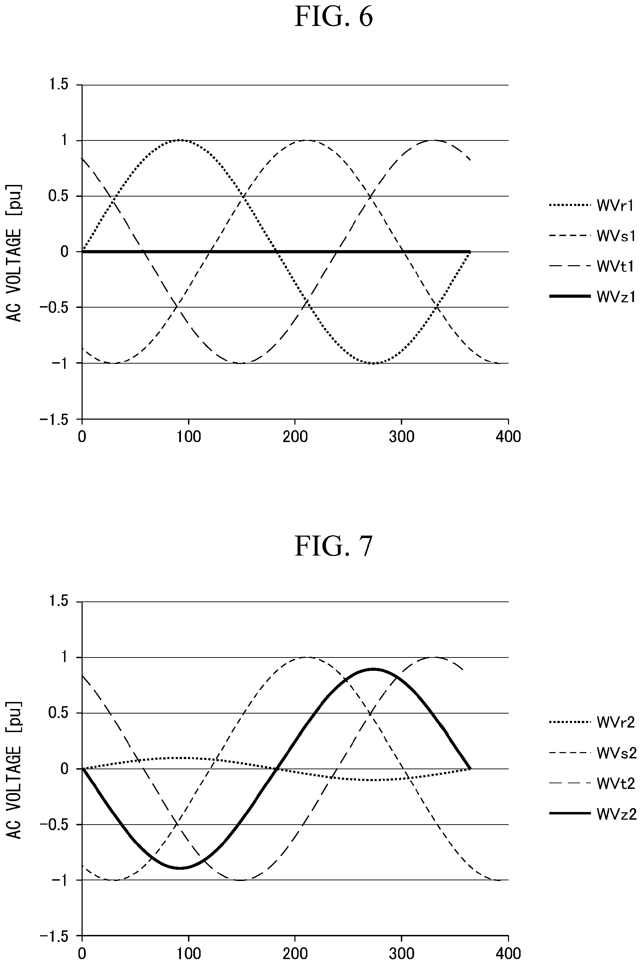

Fig. 6 is a diagram illustrating a voltage of each phase of an AC system in a case in which no external disturbance occurs. Waveforms WVr1, WVs1, and WVt1 illustrated in Fig. 6 represent changes in an AC voltage of the R-phase primary winding W1r, an AC voltage of the S-phase primary winding W1s, and an AC voltage of the T-phase primary winding W1t with respect to time in a case in which no external disturbance occurs in the AC system. A waveform WVz1 represents a change in a zero sequence voltage with respect to time in a case in which no external disturbance occurs in the AC system.

As illustrated in Fig. 6, in a case in which no external disturbance occurs in the AC system (in other words, in the case of a normal state), an AC voltage in which three phases are balanced is applied to the primary winding W1. In a case in which an AC voltage is balanced in three phases in the primary winding W1, the zero sequence voltage becomes "0", and no current flows through the quaternary winding W4. For this reason, as described above, even when a leakage impedance between the quaternary winding W4 and the secondary winding W2 and a leakage impedance between the quaternary winding W4 and the tertiary winding W3 do not match each other, there is no effect on the operation of the power converter 10.

Fig. 7 is a diagram illustrating a voltage of each phase of an AC system in a case in which an external disturbance occurs. A state in which an external disturbance occurs, for example, is a state in which a ground fault occurs in any one line of the primary windings W1. Waveforms WVr2, WVs2, and WVt2 illustrated in Fig. 7 respectively represent changes in an AC voltage appearing in the R-phase primary winding W1r, an AC voltage appearing in the S-phase primary winding W1s, and an AC voltage appearing in the T-phase primary winding W1t with respect to time in a case in which an external disturbance occurs in an AC system. A waveform WVz2 represents a change in a zero sequence voltage with respect to time in a case in which an external disturbance occurs in the AC system.

As illustrated in Fig. 7, in a case in which an external disturbance occurs in the AC system, AC voltages in the primary winding W1 become imbalanced in three phases. In this case, a zero sequence voltage WVz2 is generated, and a current flows through the quaternary winding W4.

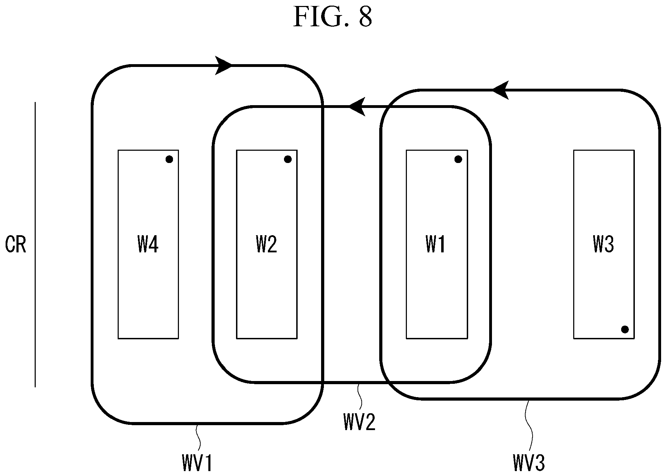

Fig. 8 is a diagram schematically illustrating magnetic fluxes generated around windings W in a case in which an external disturbance occurs. The current flowing through the quaternary winding W4 is a current that circulates inside a delta connection. At this time, in a case in which a leakage impedance between the quaternary winding W4 and the secondary winding W2 and a leakage impedance between the quaternary winding W4 and the tertiary winding W3 do not match each other, magnetic fluxes interlinked with the windings W are different from each other, and thus magnetomotive forces cannot be offset, and induced voltages according to magnetomotive forces that cannot be offset are induced in the secondary winding W2 and the tertiary winding W3.

The magnetic fluxes illustrated in Fig. 8 are magnetic fluxes accompanying magnetomotive forces that cannot be offset as waveforms WV1, WV2, and WV3. The waveform WV1 is a magnetic flux that interlinks with the secondary winding W2 among leakage fluxes generated by the quaternary winding W4. The waveform WV2 is a magnetic flux that interlinks with the secondary winding W2 among leakage fluxes generated by the primary winding W1. The waveform WV3 is a magnetic flux that interlinks with the tertiary winding W3 among leakage fluxes generated by the primary winding W1. Since the transformer TR is designed such that a leakage impedance between the primary winding W1 and the secondary winding W2 and a leakage impedance between the primary winding W1 and the tertiary winding W3 match each other, voltages induced into the secondary winding W2 and the tertiary winding W3 in accordance with a current flowing through the primary winding W1 match each other. For this reason, the current flowing through the primary winding W1 has hardly any influence on an AC system or a DC system. On the other hand, as described above, since a leakage impedance between the quaternary winding W4 and the secondary winding W2 and a leakage impedance between the quaternary winding W4 and the tertiary winding W3 do not match each other, voltages induced in the secondary winding W2 and the tertiary winding W3 in accordance with a current flowing through the quaternary winding W4 do not match each other, and desired power conversion cannot be performed.

In a case in which induced voltages corresponding to the magnetomotive forces that cannot be offset are induced in the windings W, imbalance occurs between a voltage of the capacitor C1 of the positive-side arm and a voltage of the capacitor C1 of the negative-side arm, and a DC voltage of the DC system varies. In this case, the converter controller 20 cannot convert AC power into desired DC power or cannot convert DC power into desired AC power. Thus, as illustrated below, the converter controller 20 performs control of the power converter 10 such that magnetomotive forces generated in accordance with no matching between the leakage impedance between the quaternary winding W4 and the secondary winding W2 and the leakage impedance between the quaternary winding W4 and the tertiary winding W3 are offset.

[Converter controller 20]

Basically, in a case in which AC power of an AC system is converted into DC power of a DC system, the converter controller 20 performs switching of each switching element Q to on/off such that AC active power flowing from the AC system side into the power converter 10 and DC active power flowing out from the power converter 10 to the DC system match each other. In addition, in a case in which DC power of a DC system is converted into AC power of an AC system, the converter controller 20 performs switching of each switching element Q to on/off such that DC active power flowing from the DC system into the power converter 10 and AC active power flowing out from the power converter 10 to the AC system match each other. The converter controller 20 controls the power converter 10 in this way, whereby the voltage of the capacitor C1 of each cell CL of the power converter 10 is maintained to be constant, and a stable operation of a wide area power system is realized. In the following description, the voltage of the capacitor C1 will be also referred to as a "capacitor voltage".

In addition, since a power loss accompanying power conversion occurs inside the power converter 10, the converter controller 20 performs feedback control of a capacitor voltage using one of an AC system and a DC system as a reference point of the control. The converter controller 20, for example, controls AC active power of an AC system using DC active power of a DC system as a reference, thereby performing feedback control of capacitor voltages. More specifically, the converter controller 20 performs feedback control for controlling AC power of the AC system such that each capacitor voltage is detected, and a decrease in each capacitor voltage corresponding to a power loss is supplemented (capacitor voltages are boosted). In addition, the converter controller 20 performs feedback control for controlling AC power such that, in a case in which the capacitor voltage becomes equal to or higher than a specified voltage, the capacitor voltage is lowered for maintaining the specified voltage. In the description presented above, although a case in which the reference point is set as the DC system has been described, in a case in which the AC system is set as the reference point, AC and DC may be read interchangeably.

In a case in which an external disturbance occurs in the AC system, the converter controller 20 performs feed forward control of capacitor voltages such that magnetomotive forces generated in accordance with no matching between a leakage impedance between the quaternary winding W4 and the secondary winding W2 and a leakage impedance between the quaternary winding W4 and the tertiary winding W3 are offset. In the following description, an induced voltage corresponding to magnetomotive forces generated in accordance with no matching between the leakage impedance between the quaternary winding W4 and the secondary winding W2 and the leakage impedance between the quaternary winding W4 and the tertiary winding W3 will be simply referred to as an "induced voltage".

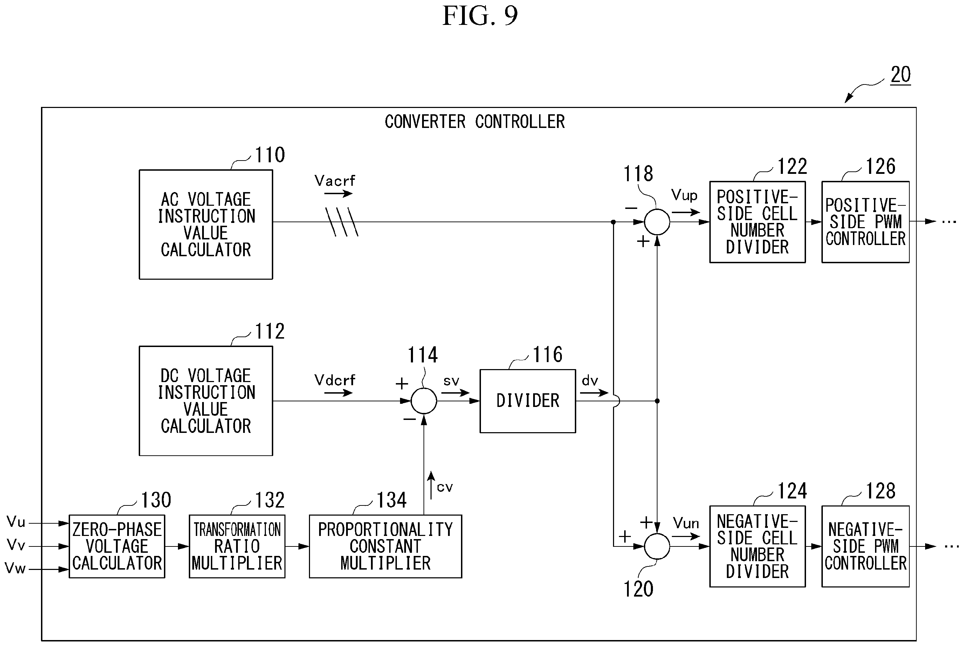

Fig. 9 is a diagram illustrating an example of the configuration of the converter controller 20. The converter controller 20, for example includes an AC voltage instruction value calculator 110, a DC voltage instruction value calculator 112, a first calculation unit 114, a divider 116, a second calculation unit 118, a third calculation unit 120, a positive-side cell number divider 122, a negative-side cell number divider 124, a positive-side PWM controller 126, a negative-side PWM controller 128, a zero sequence voltage calculator 130, a transformation ratio multiplier 132, and a proportionality constant multiplier 134. Such functional units, for example, are realized by a hardware processor such as a central processing unit (CPU) executing a program (software). Some or all of such constituent elements may be realized by hardware (a circuit unit; including circuitry) such as a large scale integration (LSI), an application specific integrated circuit (ASIC), a field-programmable gate array (FPGA), and a graphics processing unit (GPU) or may be realized by software and hardware in cooperation.

The AC voltage instruction value calculator 110 calculates an AC voltage instruction value Vacrf used for an instruction for an AC voltage value of an AC system to be output by the power converter 10 such that desired power conversion instructed from a controller (hereinafter, referred to as a wide area power system controller (not illustrated in the drawing)) controlling supply (circulation) of power between power systems of an AC system and a DC system can be performed. The DC voltage instruction value calculator 112 calculates a DC voltage instruction value Vdcrf used for an instruction for a DC voltage value of the DC system to be output by the power converter 10. The wide area power system controller and the converter controller 20, for example, transmit and receive various kinds of information such as an AC voltage instruction value, a DC voltage instruction value, and the like through a network. The network, for example, includes a wide area network (WAN), a local area network (LAN), and the like. In addition, the AC voltage instruction value calculator 110 and the DC voltage instruction value calculator 112 also perform calculation relating to feedback control of capacitor voltages described above in addition to the calculation of instruction values required for a desired power conversion operation.

The converter controller 20 may calculate an AC voltage instruction value Vacrf and a DC voltage instruction value Vdcrf using a technology of feedback or the like using an amplitude or a phase of an AC voltage and an amplitude of a DC voltage based on a power conversion operation set in advance instead of the configuration for calculating an AC voltage instruction value Vacrf and a DC voltage instruction value Vdcrf such that desired power conversion instructed from the wide area power system controller can be performed.

The first calculation unit 114 subtracts a correction value cv calculated by the proportionality constant multiplier 134 from the DC voltage instruction value Vdcrf calculated by the DC voltage instruction value calculator 112. The correction value cv is "0" in a case in which no external disturbance occurs in the AC system and is a value corresponding to a zero sequence voltage in a case in which an external disturbance occurs in the AC system. First, the case in which no external disturbance occurs in the AC system (in other words, the correction value cv is "0") will be described, and the case in which an external disturbance occurs in the AC system will be described later. The first calculation unit 114 calculates a value (hereinafter, referred to as a subtraction value sv) acquired by subtracting the correction value cv (in this case, "0") from the DC voltage instruction value Vdcrf.

The divider 116 divides the subtraction value sv calculated by the first calculation unit 114 by "2". The divider 116 outputs the value (hereinafter, referred to as a division value dv) acquired by dividing the subtraction value sv by "2" to the second calculation unit 118 and the third calculation unit 120. The division value dv is represented in Equation (1).

$$dv = Vdcrf/2 \quad (1)$$

The second calculation unit 118 calculates a voltage value to be output to the positive-side arm (hereinafter, referred to as a positive-side output voltage value Vup) on the basis of the AC voltage instruction value Vacrf acquired by the AC voltage instruction value calculator 110 and the division value dv calculated by the divider 116. As illustrated in Fig. 1, since the positive side of the transformer TR has a subtractive polarity, and the negative side of the transformer TR has an additive polarity, the second calculation unit 118 calculates a value acquired by adding the division value dv to a value acquired by multiplying the AC voltage instruction value Vacrf by "-1" as a positive-side output voltage value Vup. The positive-side output voltage value Vup is represented in Equation (2).

$$Vup = -Vuref+Vdcref/2 \quad (2)$$

The third calculation unit 120 calculates a voltage value to be output to the negative-side arm (hereinafter, referred to as a negative-side output voltage value Vun) on the basis of the AC voltage instruction value Vacrf acquired by the AC voltage instruction value calculator 110 and the division value dv calculated by the divider 116. As described above, since the negative side of the transformer TR has the additive polarity, the third calculation unit 120 calculates a value acquired by dividing the AC voltage instruction value Vacrf by the division value dv as a negative-side output voltage value Vun. The positive-side output voltage value Vup is represented in Equation (3).

$$Vun = Vuref+Vdcref/2 \quad (3)$$

The positive-side cell number divider 122 calculates a voltage value to be output to each cell CL of the positive-side arm on the basis of the positive-side output voltage value Vup calculated by the second calculation unit 118 and the number of cells CL included in the positive-side arm (in this example, n). On the whole, a DC voltage between the neutral point CP and the positive-side arm coincides with a sum of capacitor voltages of n capacitors C1 connected in series with the positive-side arm. In other words, by controlling an output voltage of each cell CL of the positive-side arm such that it has a value acquired by dividing the positive-side output voltage value Vup by n, the voltage between the neutral point CP and the positive-side arm can be configured to be the positive-side output voltage value Vup. The positive-side cell number divider 122 calculates a value acquired by dividing the positive-side output voltage value Vup by n as the output voltage value of each cell CL of the positive-side arm.

The negative-side cell number divider 124 calculates a voltage value to be output to each cell CL of the negative-side arm on the basis of the negative-side output voltage value Vun calculated by the third calculation unit 120 and the number of cells CL included in the negative-side arm (in this example, n). On the whole, a DC voltage between the neutral point CP and the negative-side arm coincides with a sum of capacitor voltages of n capacitors C1 connected in series with the negative-side arm. In other words, by controlling an output voltage of each cell CL of the negative-side arm such that it has a value acquired by dividing the negative-side output voltage value Vun by n, the DC voltage between the neutral point CP and the negative-side arm can be configured to be the negative-side output voltage value Vun. The negative-side cell number divider 124 calculates a value acquired by dividing the negative-side output voltage value Vun by n as the output voltage value of each cell CL of the negative-side arm.

The positive-side PWM controller 126 generates a positive-side pulse width modulation (PWM) control signal through triangular wave comparison or the like on the basis of a target output voltage of the cells CL of the positive-side arm calculated by the positive-side cell number divider 122 and outputs the generated positive-side PWM control signal to the power converter 10. The power converter 10 switches the switching element Q of the cell CL of the positive-side arm to on or off on the basis of the acquired positive-side PWM control signal.

The negative-side PWM controller 128 generates a negative-side PWM control signal on the basis of a target output voltage of the cells CL of the negative-side arm calculated by the negative-side cell number divider 124 and outputs the generated negative-side PWM control signal to the power converter 10. The power converter 10 switches the switching element Q of the cell CL of the negative-side arm to on or off on the basis of the acquired negative-side PWM control signal.

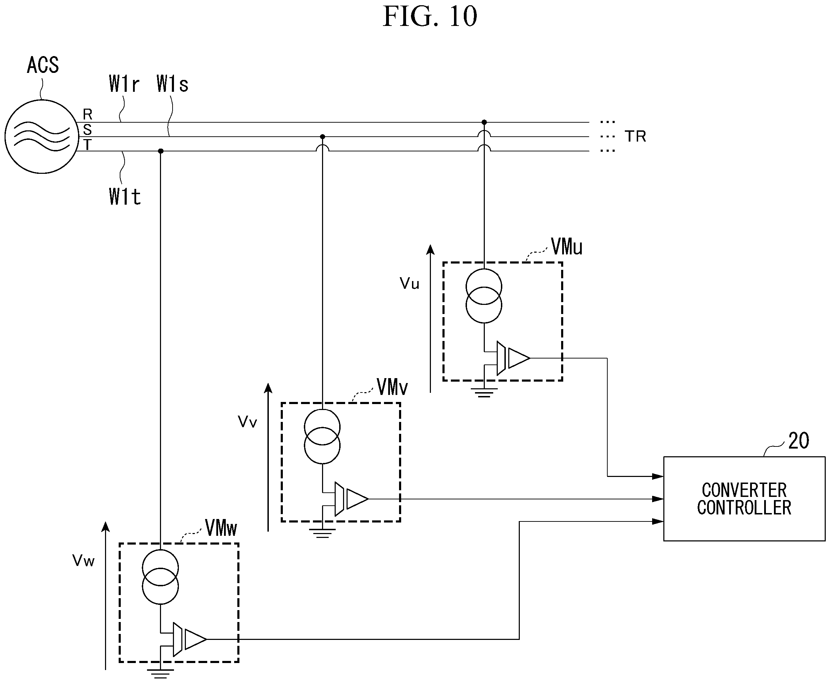

The zero sequence voltage calculator 130 calculates a zero sequence voltage on the basis of an AC voltage of each phase of the AC power. Fig. 10 is a diagram illustrating an example of a detection technique for detecting an AC voltage of each phase using a voltage detector VM. As illustrated in Fig. 10, the voltage detector VM that detects an AC voltage value of each phase of the AC system is connected to each primary winding W1. More specifically, a voltage detector VMr is connected to the R-phase primary winding W1r, a voltage detector VMs is connected to the S-phase primary winding W1s, and a voltage detector VMt is connected to the T-phase primary winding W1t. The voltage detector VMr detects an AC voltage of the R phase with respect to the ground electric potential (hereinafter, referred to as an R-phase AC voltage Vu), the voltage detector VMs detects an AC voltage of the S phase with respect to the ground electric potential (hereinafter, referred to as an S-phase AC voltage Vv), and the voltage detector VMt detects an AC voltage of the T phase with respect to the ground electric potential (hereinafter, referred to as a T-phase AC voltage Vw).

Referring back to Fig. 9, the zero sequence voltage calculator 130 calculates a value acquired by dividing a sum of the R-phase AC voltage Vu, the S-phase AC voltage Vv, and the T-phase AC voltage Vw that have been divided by "3" as a zero sequence voltage V0. The zero sequence voltage V0 is represented using Equation (4).

$$V0 = (Vu+Vv+Vw)/3 \qquad (4)$$

The transformation ratio multiplier 132 multiplies the zero sequence voltage V0 calculated by the zero sequence voltage calculator 130 by a transformation ratio of the transformer TR.

The proportionality constant multiplier 134 multiplies the value, which is acquired by multiplying the zero sequence voltage V0 by the transformation ratio, by a proportionality constant K. Since the zero sequence voltage and an induced voltage are in a proportional relation, by multiplying the zero sequence voltage V0 by the proportionality constant K, the induced voltage can be calculated. The proportionality constant K is acquired by measuring an induced voltage generated between the secondary winding W2 and the tertiary winding W3 when a zero sequence voltage of a certain magnitude is applied a transformer TR after the transformer TR is designed.

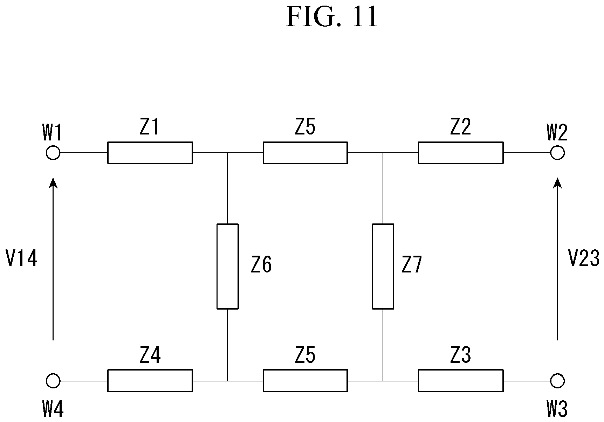

The proportionality constant K is calculated using an equivalent circuit of the leakage impedance of the transformer TR. Fig. 11 is a diagram illustrating an example of an equivalent circuit of leakage impedance of a transformer TR. In the case of four-winding transformer like the transformer TR, there are a leakage impedance Z12 between the primary winding W1 and the secondary winding W2, a leakage impedance Z 13 between the primary winding W1 and the tertiary winding W3, a leakage impedance Z14 between the primary winding W1 and the quaternary winding W4, a leakage impedance Z23 between the secondary winding W2 and the tertiary winding W3, a leakage impedance Z24 between the secondary winding W2 and the quaternary winding W4, and a leakage impedance Z34 between the tertiary winding W3 and the quaternary winding W4 in the transformer TR.

Leakage impedances Z1 to Z7 of an equivalent circuit of the leakage impedances of the transformer TR illustrated in Fig. 11 can be calculated from the leakage impedances Z12, Z13, Z14, Z23, Z24, and Z34 using a known method. In other words, the proportionality coefficient K is calculated using Equation (5), and the leakage impedance Z7 is calculated using Equation (6).

$$K = V23/V14 = (Z7)/(Z1+Z4+Z7)\times(Z6)/(2\times Z5+Z6) \qquad (5)$$

$$Z7 = Z6\times(2\times Z5+Z6)/(2\times Z5+2\times Z6) \qquad (6)$$

Referring back to Fig. 9, the proportionality constant multiplier 134 calculates a value by multiplying a value, which is acquired by multiplying the zero sequence voltage by the transformation ratio, by the proportionality coefficient K as a correction value cv. The first calculation unit 114 calculates a subtraction value sv by subtracting the correction value cv calculated by the proportionality constant multiplier 134 from the DC voltage instruction value Vdcrf.

By adding a division value dv based on the subtraction value sv to the positive-side output voltage value Vup and the negative-side output voltage value Vnp, the converter controller 20 can perform control of voltages output by the positive-side arm and the negative-side arm such that an electromotive force generated in accordance with no matching between the leakage impedance between the quaternary winding W4 and the secondary winding W2 and the leakage impedance between the quaternary winding W4 and the tertiary winding W3 is offset.

[Comparison with comparative example]

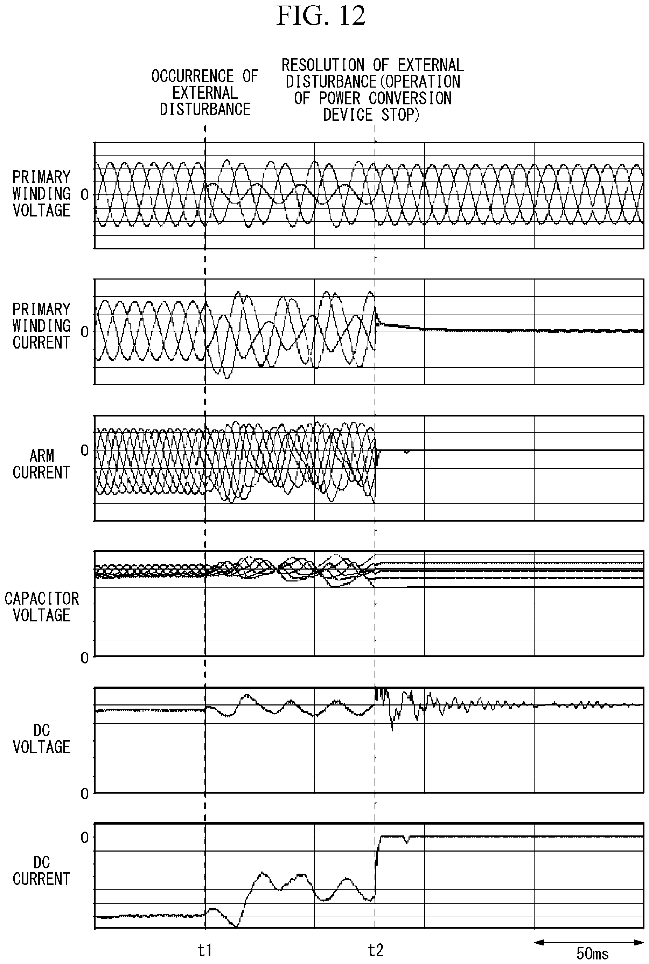

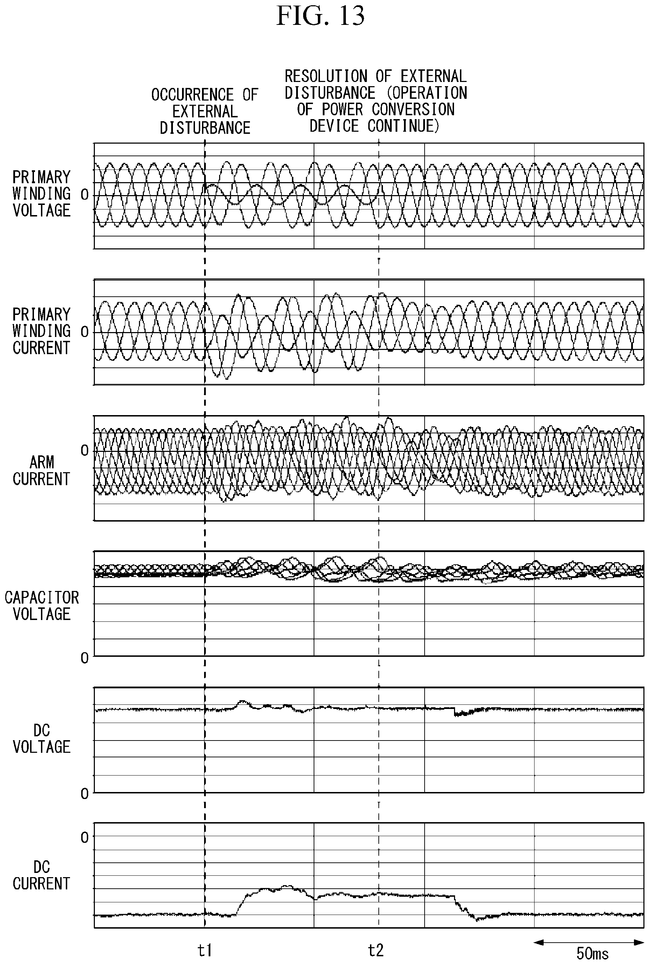

Fig. 12 is a diagram illustrating an example of control results acquired by a converter controller of a comparative example. Fig. 13 is a diagram illustrating an example of control results of a power converter 10 acquired using a converter controller 20.
The converter controller of the comparative example does not perform control for offsetting an electromotive force generated in accordance with no matching between the leakage impedance between the quaternary winding W4 and the secondary winding W2 and the leakage impedance between the quaternary winding W4 and the tertiary winding W3.
In Figs. 12 and 13, a waveform representing changes in an AC voltage of a primary winding W1 (in other words, of an AC system) with respect to time, a waveform representing changes in an AC current of the primary winding W1 with respect to time, waveforms representing changes in a current flowing through an upper arm with respect to time and changes in a current flowing through a lower arm with respect to time for each leg LG, waveforms representing changes in an average value of the capacitor voltage of a capacitor C1 of the upper arm with respect to time and changes in an average of the capacitor voltage of a capacitor C1 of the lower arm with respect to time for each leg LG, and a waveform representing changes in a DC voltage between a positive electrode P and a negative electrode N (in other words, a DC voltage of the DC system) with respect to time are illustrated. In the example illustrated in Figs. 12 and 13, the DC current has a positive value in a case in which power is circulated (transmitted) from the AC system side to the DC system side and has a negative value in a case in which power is circulated (transmitted) from the DC system side to the AC system side.
An external disturbance (for example, a ground fault in one line of the primary winding W1) occurs in the primary winding W1 at a time t1. In accordance with this, an AC current and an AC voltage of the primary winding W1 in which a ground fault has occurred decrease. In addition, in accordance with a decrease in the AC voltage, the arm current and the capacitor voltage oscillate, and the DC current and the DC voltage also oscillate in accordance with this oscillation.
In the control results of the conventional control illustrated in Fig. 12, although the external disturbance is resolved by eliminating the ground fault at a time t2, the capacitor voltages of some arms reach an overvoltage protection voltage, and thus the operation of the power conversion device 1 (the power converter 10) stops. For example, the time t2 is a timing after about 70 [ms] elapses from the time t1. The operation of the power converter 10 stops, and the current of the primary winding W1, the arm current, and the DC current become "0". In addition, since the capacitor C1 that has reached the overvoltage protection voltage needs to be discharged even after the resolution of the external disturbance, the converter controller 20 cannot immediately start the operation.
In contrast to this, in the control results of the converter controller 20 illustrated in Fig. 13, control is performed by the converter controller 20 such that an electromotive force generated in accordance with no matching between the leakage impedance between the quaternary winding W4 and the secondary winding W2 and the leakage impedance between the quaternary winding W4 and the tertiary winding W3 is offset, and accordingly, oscillations of the arm currents and the capacitor voltages are inhibited, and the DC current and the DC voltage do not oscillate. In addition, also after the external disturbance occurs, the DC system supplies a DC voltage that is almost the same as that before the occurrence of the external disturbance. For this reason, the converter controller 20 can continue the operation also while the external disturbance occurs. In addition, even after the external disturbance is resolved (in other words, even after the time t2), discharge of the capacitor C1 that has reached the overvoltage protection voltage does not need to be performed, and accordingly, the converter controller 20 can continue the operation.

[Processing flow]

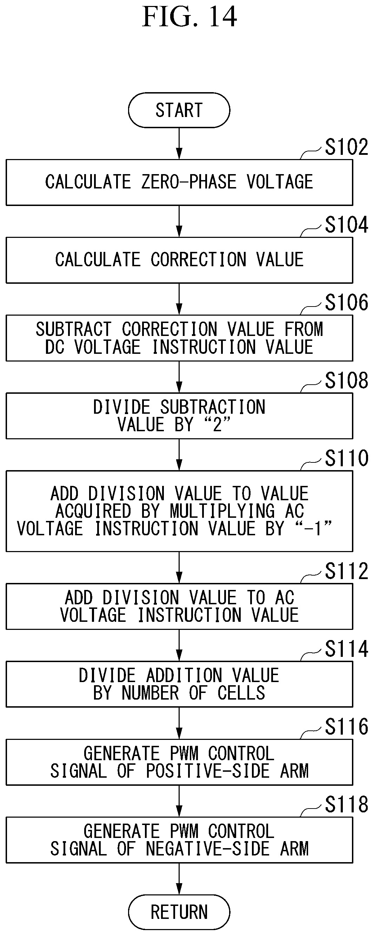

Fig. 14 is a flowchart illustrating an example of the process of the converter controller 20. The zero sequence voltage calculator 130 calculates a zero sequence voltage on the basis of an AC voltage detected by each voltage detector VM (Step S 102). The proportionality constant multiplier 134 calculates a correction value cv by multiplying a value, which is acquired by multiplying the zero sequence voltage by the transformation ratio, by the proportionality constant K using the transformation ratio multiplier 132 (Step S104). The first calculation unit 114 calculates a subtraction value sv by subtracting the correction value cv from the DC voltage instruction value Vdcrf acquired by the DC voltage instruction value calculator 112 (Step S106).
The divider 116 calculates a division value dv by dividing the subtraction value sv calculated by the first calculation unit 114 by "2" (Step S108). The second calculation unit 118 calculates a value acquired by adding the division value dv to a value acquired by multiplying the AC voltage instruction value Vacrf by "-1" as a positive-side output voltage value Vup (Step S110). In addition, the third calculation unit 120 calculates a value acquired by adding the division value dv to the AC voltage instruction value Vacrf as a negative-side output voltage value Vnp (Step S112).

The positive-side cell number divider 122 calculates a value acquired by dividing the positive-side output voltage value Vup by the number of cells CL included in the positive-side arm (in this example, n) as an output voltage of each cell CL of the positive-side arm, and the negative-side cell number divider 124 calculates a value acquired by dividing the negative-side output voltage value Vnp by the number of cells CL included in the negative-side arm (in this example, n) as an output voltage of each cell CL of the negative-side arm (Step S114).

The positive-side PWM controller 126 generates a PWM control signal used for controlling the switching element Q such that the output voltage of the cell CL of the current positive-side arm becomes close to the calculated output voltage value on the basis of the capacitor voltage of the capacitor C1 of the cell CL of the positive-side arm calculated by the positive-side cell number divider 122 (Step S116). The negative-side PWM controller 128 generates a PWM control signal used for controlling the switching element Q such that the output voltage of the cell CL of the current negative-side arm becomes close to the calculated output voltage value on the basis of the capacitor voltage of the capacitor C1 of the cell CL of the negative-side arm calculated by the negative-side cell number divider 124 (Step S118).

The power converter 10 can perform control of voltages output by the positive-side arm and the negative-side arm such that an electromotive force generated in accordance with no matching between the leakage impedance between the quaternary winding W4 and the secondary winding W2 and the leakage impedance between the quaternary winding W4 and the tertiary winding W3 is offset by switching on/off the switching elements Q of the cells CL of the positive-side arm and the negative-side arm on the basis of the acquired PWM control signal.

[Summary of embodiment]

According to at least one embodiment described above, by outputting a zero sequence voltage for offsetting an external disturbance voltage caused in the secondary winding W2 and the tertiary winding W3 by controlling the switching element Q of each arm, the converter controller 20 can continue the operation even in a case in which an external disturbance occurs in an AC system.

Although several embodiments of the present invention have been described, such embodiments are presented as examples and are not for the purpose of limiting the scope of the invention. The scope of the invention is defined by the appended claims.

**Claims**

**1.** A power conversion device (1) comprising:

a positive-side DC terminal (P), a negative-side DC terminal (N), and a power converter (10) having arms corresponding to three phases,
each of the arms including:

a positive-side arm having a first end connected to the positive-side DC terminal (P) and including a plurality of converters connected in series, the plurality of converters including a plurality of switching elements connected in series and capacitors connected in parallel with the plurality of switching elements connected in series; and
a negative-side arm having a first end connected to the negative-side DC terminal (N) and including a plurality of converters connected in series, the plurality of converters including a plurality of switching elements connected in series and capacitors connected in parallel with the plurality of switching elements connected in series;
the power converter (10) further having a four-winding transformer (TR) including a primary winding (W1) that is connectable to a three-phase AC system, a secondary winding (W2) that is disposed between a second end of the positive-side arm and a neutral point (CP) and is magnetically coupled with the primary winding, a tertiary winding (W3) that is disposed between a second end of the negative-side arm and the neutral point (CP) and is magnetically coupled with the primary winding (W1) with a polarity opposite to that of the secondary winding (W2), and a quaternary winding (W4) that is delta connected;
**characterized in that** the power conversion device further comprising:

a converter controller (20) configured to calculate a correction value (cv) for controlling the switching elements of the arms to cause output of a voltage for offsetting external disturbance voltages caused in the secondary winding (W2) and the tertiary winding (W3) due to the quaternary winding (W4),
wherein the converter controller (20) is configured to calculate a zero sequence voltage of the three-phase AC system and to calculate the correction value (cv) by multiplying a value, which is acquired by multiplying the zero sequence voltage by a transformation ratio, by a proportionality coefficient (K), the proportionality coefficient being calculated on the basis of a leakage impedance between the primary winding (W1) and the secondary winding (W2), a leakage impedance between the primary winding (W1) and the tertiary winding (W3), a leakage impedance between the primary winding (W1) and the quaternary winding (W4), a leakage impedance between the secondary winding (W2) and the tertiary winding (W3), a leakage impedance between the secondary winding (W2) and the quaternary winding (W4), and a leakage impedance between the tertiary winding (W3) and the quaternary winding (W4).

2. The power conversion device according to claim 1, wherein the converter controller (20) further comprises a zero sequence voltage calculator (130) configured to calculate the zero sequence voltage.

3. The power conversion device according to claim 2, further comprising voltage detectors (VM) configured to detect voltages of the primary windings (W1) of the three phases,
wherein the converter controller (20) is configured to calculate the zero sequence voltage of the three-phase AC system to which the primary windings (W1) are connected by acquiring a sum of voltages of the primary windings (W1) of the three phases detected by the voltage detectors (VM).

4. The power conversion device according to any one of claims 1 to 3, wherein the four-winding transformer (TR) has a winding configuration in which a leakage impedance between the primary winding (W1) and the secondary winding (W2) and a leakage impedance between the primary winding (W1) and the tertiary winding (W3) are caused to match each other, and a leakage impedance between the secondary winding (W2) and the quaternary winding (W4) and a leakage impedance between the tertiary winding (W3) and the quaternary winding (W4) are caused to be different from each other.

5. The power conversion device according to any one of claims 1 to 4,

wherein the four-winding transformer (TR) is configured to dispose the primary winding (W1), the secondary winding (W2), the tertiary winding (W3), and the quaternary winding (W4) to be in concentric circle shapes and form layers in a radial direction with respect to an iron core, and
wherein the secondary winding (W2) and the tertiary winding (W3) are disposed to form layers adjacent to the primary winding (W1).

6. The power conversion device according to any one of claims 1 to 5, wherein the converter controller (20) is configured to perform switching control of the negative-side arm on the basis of a value acquired by adding a value acquired by dividing a DC voltage output by the power converter (10) by 2 to an AC voltage value of the three-phase AC system and perform switching control of the positive-side arm on the basis of a value acquired by adding a value acquired by dividing the DC voltage by 2 to a value acquired by multiplying the AC voltage value by "-1".

7. A method for controlling a power conversion device (1), wherein the power conversion device (1) comprises:

a positive-side DC terminal (P), a negative-side DC terminal (N), and a power converter (10) having arms corresponding to three phases,
each of the arms including:

a positive-side arm having a first end connected to the positive-side DC terminal (P) and including a plurality of converters connected in series, the plurality of converters including a plurality of switching elements connected in series and capacitors connected in parallel with the plurality of switching elements connected in series; and
a negative-side arm having a first end connected to the negative-side DC terminal (N) and including a plurality of converters connected in series, the plurality of converters including a plurality of switching elements connected in series and capacitors connected in parallel with the plurality of switching elements connected in series;
the power converter (10) further having a four-winding transformer (TR) including a primary winding (W1) that is connected to a three-phase AC, a secondary winding (W2) that is disposed between a second end of the positive-side arm and a neutral point (CP) and is magnetically coupled with the primary winding, a tertiary winding (W3) that is disposed between a second end of the negative-side arm and the neutral point (CP) and is magnetically coupled with the primary winding (W1) with a polarity opposite to that of the secondary winding (W2), and a quaternary winding (W4) that is delta connected;

**characterized in that** the the method comprising:

calculating a correction value (cv) for controlling the switching elements of the arms to cause output of a correction value for offsetting external disturbance voltages caused in the secondary winding and the tertiary winding due to the quaternary winding,
calculating a zero sequence voltage of the three phase AC system, and calculating the correction value (cv) by multiplying a value, which is acquired by multiplying the zero sequence voltage by a transformation ratio, by a proportionality coefficient (K),
the proportionality coefficient being calculated on the basis of a leakage impedance between the primary winding (W1) and the secondary winding (W2), a leakage impedance between the primary winding (W1) and the tertiary winding (W3), a leakage impedance between the primary winding (W1) and the quaternary winding (W4), a leakage impedance between the secondary winding (W2) and the tertiary winding (W3), a leakage impedance between the secondary winding (W2) and the quaternary winding (W4), and a leakage impedance between the tertiary winding (W3) and the quaternary winding (W4).

**Patentansprüche**

1.  Leistungsumwandlungsvorrichtung (1), die Folgendes umfasst:
einen Gleichstromanschluss (P) auf der positiven Seite, einen Gleichstromanschluss (N) auf der negativen Seite und einen Leistungswandler (10) der Zweige aufweist, die drei Phasen entsprechen, wobei jeder der Zweige Folgendes umfasst:

einen Zweig auf der positiven Seite, der ein erstes Ende aufweist, das mit dem Gleichstromanschluss (P) auf der positiven Seite verbunden ist und mehrere Wandler umfasst, die in Reihe geschaltet sind, wobei die mehreren Wandler mehrere Schaltelemente, die in Reihe geschaltet sind, und Kondensatoren umfassen, die mit den mehreren in Reihe geschalteten Schaltelementen parallel geschaltet sind;
einen Zweig auf der negativen Seite, der ein erstes Ende aufweist, das mit dem Gleichstromanschluss (N) auf der negativen Seite verbunden ist und mehrere Wandler umfasst, die in Reihe geschaltet sind, wobei die mehreren Wandler mehrere Schaltelemente, die in Reihe geschaltet sind, und Kondensatoren umfassen, die mit den mehreren in Reihe geschalteten Schaltelementen parallel geschaltet sind;
wobei der Leistungswandler (10) ferner einen Vierwicklungstransformator (TR) aufweist, der eine Primärwicklung (W1), die mit einem Dreiphasen-Wechselstromsystem verbindbar ist, eine Sekundärwicklung (W2), die zwischen einem zweiten Ende des Zweiges auf der positiven Seite und einem Neutralpunkt (CP) angeordnet ist und magnetisch mit der Primärwicklung gekoppelt ist, eine Tertiärwicklung (W3), die zwischen einem zweiten Ende des Armes auf der negativen Seite und dem Neutralpunkt (CP) angeordnet ist und magnetisch mit der Primärwicklung (W1) mit einer Polarität entgegengesetzt zu derjenigen der Sekundärwicklung (W2) gekoppelt ist, und eine Quartärwicklung (W4) umfasst, die dreieckgeschaltet ist;
**dadurch gekennzeichnet, dass** die Leistungsumwandlungsvorrichtung ferner Folgendes umfasst:

eine Wandlersteuereinrichtung (20), die dazu ausgestaltet ist, einen Korrekturwert (cv) zum Steuern der Schaltelemente der Arme zu berechnen, um die Abgabe einer Spannung zum Versetzen externer Störspannungen zu bewirken, die in der Sekundärwicklung (W2) und der Tertiärwicklung (W3) aufgrund der Quartärwicklung (W4) verursacht werden,
wobei die Wandlersteuereinrichtung (20) dazu ausgestaltet ist, eine Verlagerungsspannung des Dreiphasen-Wechselstromsystems zu berechnen, um den Korrekturwert (cv) durch Multiplizieren eines Werts, der durch Multiplizieren der Verlagerungsspannung mit einem Übersetzungsverhältnis erfasst wird, mit einem Proportionalitätskoeffizienten (K) zu berechnen,
wobei der Proportionalitätskoeffizient basierend auf einer Streuimpedanz zwischen der Primärwicklung (W1) und der Sekundärwicklung (W2), einer Streuimpedanz zwischen der Primärwicklung (W1) und der Tertiärwicklung (W3), einer Streuimpedanz zwischen der Primärwicklung (W1) und der Quartärwicklung (W4), einer Streuimpedanz zwischen der Sekundärwicklung (W2) und der Tertiärwicklung (W3), einer Streuimpedanz zwischen der Sekundärwicklung (W2) und der Quartärwicklung (W4) und einer Streuimpedanz zwischen der Tertiärwicklung (W3) und der Quartärwicklung (W4) berechnet wird.

2.  Leistungsumwandlungsvorrichtung nach Anspruch 1, wobei die Wandlersteuereinrichtung (20) ferner einen Verlagerungsspannungsrechner (130) umfasst, der dazu ausgestaltet ist, die Verlagerungsspannung zu berechnen.

3. Leistungsumwandlungsvorrichtung nach Anspruch 2, die ferner Spannungsdetektoren (VM) umfasst, die dazu ausgestaltet sind, Spannungen der Primärwicklungen (W1) der drei Phasen zu detektieren, wobei die Wandlersteuereinrichtung (20) dazu ausgestaltet ist, die Verlagerungsspannung des Dreiphasen-Wechselstromsystems, mit dem die Primärwicklungen (W1) verbunden sind, durch Erfassen einer Summe von durch die Spannungsdetektoren (VM) detektierten Spannungen der Primärwicklungen (W1) der drei Phasen zu erfassen.

4. Leistungsumwandlungsvorrichtung nach einem der Ansprüche 1 bis 3, wobei der Vierwicklungstransformator (TR) eine Wicklungsausgestaltung aufweist, in der bewirkt wird, dass eine Streuimpedanz zwischen der Primärwicklung (W1) und der Sekundärwicklung (W2) und eine Streuimpedanz zwischen der Primärwicklung (W1) und der Tertiärwicklung (W3) miteinander übereinstimmen, und bewirkt wird, dass eine Streuimpedanz zwischen der Sekundärwicklung (W2) und der Quartärwicklung (W4) und eine Streuimpedanz zwischen der Tertiärwicklung (W3) und der Quartärwicklung (W4) sich voneinander unterscheiden.

5. Leistungsumwandlungsvorrichtung nach einem der Ansprüche 1 bis 4,

wobei der Vierwicklungstransformator (TR) dazu ausgestaltet ist, die Primärwicklung (W1), die Sekundärwicklung (W2), die Tertiärwicklung (W3) und die Quartärwicklung (W4) in Formen konzentrischer Kreise anzuordnen und Schichten in radialer Richtung in Bezug auf einen Eisenkern zu bilden, und wobei die Sekundärwicklung (W2) und die Tertiärwicklung (W3) so angeordnet sind, dass sie benachbart zu der Primärwicklung (W1) Schichten bilden.

6. Leistungsumwandlungsvorrichtung nach einem der Ansprüche 1 bis 5, wobei die Wandlersteuereinrichtung (20) dazu ausgestaltet ist, Schaltsteuerung des Zweigs auf der negativen Seite basierend auf einem Wert durchzuführen, der durch Addieren eines Werts, der durch Dividieren einer durch den Leistungswandler (10) abgegebenen Gleichstromleistung durch 2 erfasst wird, zu einem Wechselstromspannungswert des Dreiphasen-Wechselstromsystems erfasst wird, und Schaltsteuerung des Zweigs auf der positiven Seite basierend auf einem Wert durchzuführen, der durch Addieren eines Werts, der durch Dividieren der Gleichstromspannung durch 2 erfasst wird, zu einem Wert erfasst wird, der durch Multiplizieren des Wechselstromspannungswerts mit "-1", erfasst wird.

7. Verfahren zur Steuerung einer Leistungsumwandlungsvorrichtung (1), wobei die Leistungsumwandlungsvorrichtung (1) Folgendes umfasst:
einen Gleichstromanschluss (P) auf der positiven Seite, einen Gleichstromanschluss (N) auf der negativen Seite und einen Leistungswandler (10), der Zweige aufweist, die drei Phasen entsprechen, wobei jeder der Zweige Folgendes umfasst:

einen Zweig auf der positiven Seite, der ein erstes Ende aufweist, das mit dem Gleichstromanschluss (P) auf der positiven Seite verbunden ist und mehrere Wandler umfasst, die in Reihe geschaltet sind, wobei die mehreren Wandler mehrere Schaltelemente, die in Reihe geschaltet sind, und Kondensatoren umfassen, die mit den mehreren in Reihe geschalteten Schaltelementen parallel geschaltet sind;
einen Zweig auf der negativen Seite, der ein erstes Ende aufweist, das mit dem Gleichstromanschluss (N) auf der negativen Seite verbunden ist und mehrere Wandler umfasst, die in Reihe geschaltet sind, wobei die mehreren Wandler mehrere Schaltelemente, die in Reihe geschaltet sind, und Kondensatoren umfassen, die mit den mehreren in Reihe geschalteten Schaltelementen parallel geschaltet sind;
wobei der Leistungswandler (10) ferner einen Vierwicklungstransformator (TR) aufweist, der eine Primärwicklung (W1), die mit einem Dreiphasen-Wechselstrom verbindbar ist, eine Sekundärwicklung (W2), die zwischen einem zweiten Ende des Zweiges auf der positiven Seite und einem Neutralpunkt (CP) angeordnet ist und magnetisch mit der Primärwicklung gekoppelt ist, eine Tertiärwicklung (W3), die zwischen einem zweiten Ende des Armes auf der negativen Seite und dem Neutralpunkt (CP) angeordnet ist und magnetisch mit der Primärwicklung (W1) mit einer Polarität entgegengesetzt zu derjenigen der Sekundärwicklung (W2) gekoppelt ist, und eine Quartärwicklung (W4) umfasst, die dreieckgeschaltet ist;
**dadurch gekennzeichnet, dass** das Verfahren Folgendes umfasst:

Berechnen eines Korrekturwerts (cv) zum Steuern der Schaltelemente der Zweige, um die Ausgabe eines Korrekturwerts zum Versetzen externer Störspannungen zu bewirken, die in der Sekundärwicklung und der Tertiärwicklung aufgrund der Quartärwicklung verursacht werden,
Berechnen einer Verlagerungsspannung des Dreiphasen-Wechselstromsystems und Berechnen des Korrekturwerts (cv) durch Multiplizieren eines Werts, der durch Multiplizieren der Verlagerungsspannung mit einem Übersetzungsverhältnis erfasst wird, mit einem Proportionalitätskoeffizienten (K) zu berechnen,

wobei der Proportionalitätskoeffizient basierend auf einer Streuimpedanz zwischen der Primärwicklung (W1) und der Sekundärwicklung (W2), einer Streuimpedanz zwischen der Primärwicklung (W1) und der Tertiärwicklung (W3), einer Streuimpedanz zwischen der Primärwicklung (W1) und der Quartärwicklung (W4), einer Streuimpedanz zwischen der Sekundärwicklung (W2) und der Tertiärwicklung (W3), einer Streuimpedanz zwischen der Sekundärwicklung (W2) und der Quartärwicklung (W4) und einer Streuimpedanz zwischen der Tertiärwicklung (W3) und der Quartärwicklung (W4) berechnet wird.

## Revendications

1. Dispositif de conversion de puissance (1) comprenant :
une borne CC côté positif (P), une borne CC côté négatif (N), et un convertisseur de puissance (10) comportant des branches correspondant à trois phases, chacune des branches incluant :

une branche côté positif comportant une première extrémité reliée à la borne CC côté positif (P) et incluant une pluralité de convertisseurs reliés en série, la pluralité de convertisseurs incluant une pluralité d'éléments de commutation reliés en série et des condensateurs reliés en parallèle à la pluralité d'éléments de commutation reliés en série ;
une branche côté négatif comportant une première extrémité reliée à la borne CC côté négatif (N) et incluant une pluralité de convertisseurs reliés en série, la pluralité de convertisseurs incluant une pluralité d'éléments de commutation reliés en série et des condensateurs reliés en parallèle à la pluralité d'éléments de commutation reliés en série ;
le convertisseur de puissance (10) comportant en outre un transformateur à quatre enroulements (TR) incluant un enroulement primaire (W1) qui peut être relié à un système CA triphasé, un enroulement secondaire (W2) qui est disposé entre une deuxième extrémité de la branche côté positif et un point neutre (CP) et est magnétiquement couplé à l'enroulement primaire, un enroulement tertiaire (W3) qui est disposé entre une deuxième extrémité de la branche côté négatif et le point neutre (CP) et est magnétiquement couplé à l'enroulement primaire (W1) avec une polarité à l'opposé de celle de l'enroulement secondaire (W2), et un enroulement quaternaire (W4) qui est relié en triangle ;
**caractérisé en ce que** le dispositif de conversion de puissance comprend en outre :

un dispositif de commande de convertisseur (20) configuré pour calculer une valeur de correction (cv) pour commander aux éléments de commutation des branches de provoquer une sortie d'une tension pour compenser des tensions de perturbations externes provoquées dans l'enroulement secondaire (W2) et l'enroulement tertiaire (W3) en raison de l'enroulement quaternaire (W4),
dans lequel le dispositif de commande de convertisseur (20) est configuré pour calculer une tension homopolaire du système CA triphasé et pour calculer la valeur de correction (cv) par la multiplication d'une valeur, qui est acquise par la multiplication de la tension homopolaire par un rapport de transformation, par un coefficient de proportionnalité (K),
le coefficient de proportionnalité étant calculé sur la base d'une impédance de fuite entre l'enroulement primaire (W1) et l'enroulement secondaire (W2), d'une impédance de fuite entre l'enroulement primaire (W1) et l'enroulement tertiaire (W3), d'une impédance de fuite entre l'enroulement primaire (W1) et l'enroulement quaternaire (W4), d'une impédance de fuite entre l'enroulement secondaire (W2) et l'enroulement tertiaire (W3), d'une impédance de fuite entre l'enroulement secondaire (W2) et l'enroulement quaternaire (W4), et d'une impédance de fuite entre l'enroulement tertiaire (W3) et l'enroulement quaternaire (W4).

2. Dispositif de conversion de puissance selon la revendication 1, dans lequel le dispositif de commande de convertisseur (20) comprend en outre un calculateur de tension homopolaire (130) configuré pour calculer la tension homopolaire.

3. Dispositif de conversion de puissance selon la revendication 2, comprenant en outre des détecteurs de tension (VM) configurés pour détecter des tensions des enroulements primaires (W1) des trois phases,
dans lequel le dispositif de commande de convertisseur (20) est configuré pour calculer la tension homopolaire du système CA triphasé auquel les enroulements primaires (W1) sont reliés par l'acquisition d'une somme de tensions des enroulements primaires (W1) des trois phases détectées par les détecteurs de tension (VM).

4. Dispositif de conversion de puissance selon l'une quelconque des revendications 1 à 3, dans lequel le transformateur à quatre enroulements (TR) comporte une configuration d'enroulements dans laquelle une impédance de fuite entre l'enroulement primaire (W1) et l'enroulement secondaire (W2) et une impédance de fuite entre l'enroulement primaire (W1) et l'enroulement tertiaire (W3) sont amenées à correspondre l'une à l'autre, et une impédance de fuite entre l'enroulement secondaire (W2) et l'enroulement quaternaire (W4) et une impédance de fuite entre l'enroulement tertiaire (W3) et l'enroulement quaternaire (W4) sont amenées à être différentes l'une de l'autre.

5. Dispositif de conversion de puissance selon l'une quelconque des revendications 1 à 4,

dans lequel le transformateur à quatre enroulements (TR) est configuré pour disposer l'enroulement primaire (W1), l'enroulement secondaire (W2), l'enroulement tertiaire (W3), et l'enroulement quaternaire (W4) pour qu'ils soient en forme de cercles concentriques et pour qu'ils forment des couches dans une direction radiale par rapport à un noyau de fer, et
dans lequel l'enroulement secondaire (W2) et l'enroulement tertiaire (W3) sont disposés pour former des couches adjacentes à l'enroulement primaire (W1).

6. Dispositif de conversion de puissance selon l'une quelconque des revendications 1 à 5, dans lequel le dispositif de commande de convertisseur (20) est configuré pour réaliser une commande de commutation de la branche côté négatif sur la base d'une valeur acquise par l'addition d'une valeur acquise par la division d'une tension CC délivrée par le convertisseur de puissance (10) par 2 et d'une valeur de tension CA du système CA triphasé et réaliser une commande de commutation de la branche côté positif sur la base d'une valeur acquise par l'addition d'une valeur acquise par la division de la tension CC par 2 et d'une valeur acquise par la multiplication de la valeur de tension CA par « -1 ».

7. Procédé de commande d'un dispositif de conversion de puissance (1), dans lequel le dispositif de conversion de puissance (1) comprend :
une borne CC côté positif (P), une borne CC côté négatif (N), et un convertisseur de puissance (10) comportant des branches correspondant à trois phases, chacune des branches incluant :

une branche côté positif comportant une première extrémité reliée à la borne CC côté positif (P) et incluant une pluralité de convertisseurs reliés en série, la pluralité de convertisseurs incluant une pluralité d'éléments de commutation reliés en série et des condensateurs reliés en parallèle à la pluralité d'éléments de commutation reliés en série ; et
une branche côté négatif comportant une première extrémité reliée à la borne CC côté négatif (N) et incluant une pluralité de convertisseurs reliés en série, la pluralité de convertisseurs incluant une pluralité d'éléments de commutation reliés en série et des condensateurs reliés en parallèle à la pluralité d'éléments de commutation reliés en série ;
le convertisseur de puissance (10) comportant en outre un transformateur à quatre enroulements (TR) incluant un enroulement primaire (W1) qui est relié à un système CA triphasé, un enroulement secondaire (W2) qui est disposé entre une deuxième extrémité de la branche côté positif et un point neutre (CP) et est magnétiquement couplé à l'enroulement primaire, un enroulement tertiaire (W3) qui est disposé entre une deuxième extrémité de la branche côté négatif et le point neutre (CP) et est magnétiquement couplé à l'enroulement primaire (W1) avec une polarité à l'opposé de celle de l'enroulement secondaire (W2), et un enroulement quaternaire (W4) qui est relié en triangle ;
**caractérisé en ce que** le procédé comprend :

le calcul d'une valeur de correction (cv) pour commander aux éléments de commutation des branches de provoquer une sortie d'une valeur de correction pour compenser des tensions de perturbations externes provoquées dans l'enroulement secondaire et l'enroulement tertiaire en raison de l'enroulement quaternaire, le calcul d'une tension homopolaire du système CA triphasé, et le calcul de la valeur de correction (cv) par la multiplication d'une valeur, qui est acquise par la multiplication de la tension homopolaire par un rapport de transformation, par un coefficient de proportionnalité (K),
le coefficient de proportionnalité étant calculé sur la base d'une impédance de fuite entre l'enroulement primaire (W1) et l'enroulement secondaire (W2), d'une impédance de fuite entre l'enroulement primaire (W1) et l'enroulement tertiaire (W3), d'une impédance de fuite entre l'enroulement primaire (W1) et l'enroulement quaternaire (W4), d'une impédance de fuite entre l'enroulement secondaire (W2) et l'enroulement tertiaire (W3), d'une impédance de fuite entre l'enroulement secondaire (W2) et l'enroulement quaternaire (W4), et d'une impédance de fuite entre l'enroulement tertiaire (W3) et l'enroulement quaternaire (W4).

# FIG. 1

# FIG. 2

# FIG. 3

# FIG. 4

# FIG. 5

# FIG. 6

# FIG. 7

FIG. 8

## FIG. 9

FIG. 10

EP 3 787 175 B1

FIG. 11

# FIG. 12

OCCURRENCE OF EXTERNAL DISTURBANCE

RESOLUTION OF EXTERNAL DISTURBANCE(OPERATION OF POWER CONVERSION DEVICE STOP)

PRIMARY WINDING VOLTAGE

PRIMARY WINDING CURRENT

ARM CURRENT

CAPACITOR VOLTAGE

DC VOLTAGE

DC CURRENT

t1

t2

50ms

# FIG. 13

OCCURRENCE OF
EXTERNAL
DISTURBANCE

RESOLUTION OF EXTERNAL
DISTURBANCE (OPERATION
OF POWER CONVERSION
DEVICE CONTINUE)

PRIMARY
WINDING  0
VOLTAGE

PRIMARY
WINDING  0
CURRENT

ARM    0
CURRENT

CAPACITOR
VOLTAGE

0

DC
VOLTAGE

0

0

DC
CURRENT

t1

t2

50ms

# FIG. 14

```
                    START

                      │
                      ▼                 ╭─S102
        ┌──────────────────────────────┐
        │  CALCULATE ZERO-PHASE VOLTAGE │
        └──────────────────────────────┘
                      │
                      ▼                 ╭─S104
        ┌──────────────────────────────┐
        │   CALCULATE CORRECTION VALUE  │
        └──────────────────────────────┘
                      │
                      ▼                 ╭─S106
        ┌──────────────────────────────┐
        │  SUBTRACT CORRECTION VALUE FROM │
        │  DC VOLTAGE INSTRUCTION VALUE │
        └──────────────────────────────┘
                      │
                      ▼                 ╭─S108
        ┌──────────────────────────────┐
        │      DIVIDE SUBTRACTION       │
        │        VALUE BY "2"           │
        └──────────────────────────────┘
                      │
                      ▼                 ╭─S110
        ┌──────────────────────────────┐
        │   ADD DIVISION VALUE TO VALUE │
        │    ACQUIRED BY MULTIPLYING AC │
        │ VOLTAGE INSTRUCTION VALUE BY "-1" │
        └──────────────────────────────┘
                      │
                      ▼                 ╭─S112
        ┌──────────────────────────────┐
        │     ADD DIVISION VALUE TO AC  │
        │   VOLTAGE INSTRUCTION VALUE   │
        └──────────────────────────────┘
                      │
                      ▼                 ╭─S114
        ┌──────────────────────────────┐
        │      DIVIDE ADDITION VALUE    │
        │       BY NUMBER OF CELLS      │
        └──────────────────────────────┘
                      │
                      ▼                 ╭─S116
        ┌──────────────────────────────┐
        │      GENERATE PWM CONTROL     │
        │  SIGNAL OF POSITIVE-SIDE ARM  │
        └──────────────────────────────┘
                      │
                      ▼                 ╭─S118
        ┌──────────────────────────────┐
        │      GENERATE PWM CONTROL     │
        │  SIGNAL OF NEGATIVE-SIDE ARM  │
        └──────────────────────────────┘
                      │
                      ▼
                   RETURN
```

**EP 3 787 175 B1**

**REFERENCES CITED IN THE DESCRIPTION**

**Patent documents cited in the description**

- EP 3288169 A1
- US 2014211528 A1
- SE 1750521 A1
- US 2016139578 A1
- JP 2013115837 A
- JP 2016208743 A
- JP 2014108000 A